# EUROPEAN PATENT APPLICATION

(11) **EP 1 982 582 A2**
(43) Date of publication of application: **22.10.2008**
(21) Application number: 08007449.5
(22) Date of filing: 16.04.2008
(51) Int. Cl.: A01J 25/00

(54) **Cheesemaking apparatus**

(30) Priority: 16.04.2007 PT 10372207
(71) Applicant: UNIVERSIDADE CATOLICA PORTUGUESA, 4200-072 Porto (PT)
(72) Inventor: Delgado Domingos Antunes Malcata, Francisco Xav., 4200-072 Porto (PT); Milheiro Mendes Dos Reis, Patricia João, 4200-072 Porto (PT); Ferreira Madail, Armando, 3730-954 Vale de Cambra (PT); Nadais Leite De Pinho, Ligia Maria, 3730-954 Vale de Cambra (PT)
(74) Representative: Ferreira, Maria Silvina

(57) **Abstract**

This invention refers to a cheesemaking apparatus, particularly designed for dairy manufacturers willing to process small volumes of raw milk. The apparatus is made of stainless steel, allows sequential steps of coagulation, cutting and draining, and comprises mechanical performance with variable speed and reverse direction, via removable blades (1) for stirring milk or cutting curd depending on the rotational direction, a heating/cooling jacket (2) that uses a temperature-controlled fluid/liquid, a curd/whey sequential discharge system (A) into perforated moulds (3), a temperature control device, a whey level and a proximity control device (4), a control panel and an integrated cleaning system.

The apparatus further comprises a vat (5), supported by four legs (6), an upper cover (7) with a lid (8) used to add the rennet and/or starter cultures, two side inlets, one for milk (9) and the other for the cleaning solution (10), and, in the bottom end, a whey outlet (4) and a vertical connection with a cylinder with perforated walls (11), which allows pre-moulding of curd via filling the moulds (3), hence avoiding any type of manual handling during the whole cheesemaking process. The said cylinder (11) comprises two horizontal cutting plates (12, 13), which will eventually determine cheese dimensions.

## Description

### Technical Field

The present invention refers to a cheesemaking apparatus, particularly designed for small manufacturers willing to process small volumes of raw milk. The apparatus is made of stainless steel, and allows sequential steps of coagulation, cutting and draining of curd, as well as sequential discharge of curd/whey into moulds.

### State of the Art

Traditionally, the steps of milk coagulation and cutting/syneresis of curd, brought about by dairy farmers who process milks from small ruminants, are performed in pots, the temperature of which is empirically controlled by warm water-bath immersion, with devices for stirring/cutting not mechanically operated. Furthermore, the steps of whey draining, moulding and filling are done manually - thus making the process lengthy and particularly susceptible to microbiological contamination, so leading to likely losses in yield of the final product.

The use of enclosed vats for the manufacture of cheese is well known in the art. Patents US 4,206,880, US 4,321,860 and US 14,893 are examples of prior art pertaining to cheesemaking enclosed vats, and which comprise the coagulation, stirring/cutting and syneresis steps of the typical cheesemaking process. However, these do not allow whey draining nor moulding in a sequential way. On the other hand, EP 235,867 and EP 1,151,663 disclose devices which, despite comprising a curd/whey storage container, a whey drainage perforated column and a cutting element for cutting the curd for subsequent feeding into moulds, do not include an apparatus that could execute all sequential steps of cheesemaking.

The objective of the present invention is to provide an apparatus for cheesemaking using small volumes of milk - that allows small dairy farmers to execute the various steps of cheesemaking in a sequential way, in which manual handling of curd during draining and moulding is prevented - thus ensuring a final product with uniform quality and microbiologically safe, while providing a less labour-intensive process when compared to the traditional one.

### Brief Description of the Drawings

The invention will be explained below in greater detail, with reference to the drawings, in which:
Fig. 1 shows a schematic cross-sectional front view of the apparatus, according to the present invention; and
Fig. 2 shows a schematic cross-sectional side view of the apparatus, according to the present invention.

### Description of the Invention

The cheesemaking apparatus of the present invention comprises a vat (5), with a heating/cooling jacket (2) that uses a temperature-controlled fluid/liquid, a mechanical drive with variable speed and reverse direction, an upper cover (7), with a lid (8) to add rennet and/or starter cultures, with two side inlets - one (9) for the milk and the other (10) for the cleaning solution, and two outlets in the lower end - one (4) for whey and the other for curd, which is connected to a cylinder with perforated walls (11) that is connected in turn to two horizontal and manually removable cutting plates (12, 13), with a telescopic device for controlling the whey level(4), and temperature control or other physico-chemical control devices in particular a softness sensor device based on an ultra sound probe, or an acid detector based on a combined pH electrode, as well as proximity control devices - besides a control panel to monitor and control the several operations, and an integrated cleaning system. The vat (5), preferably with a maximum milk capacity of 50 L, is made of AISI 304 stainless steel, and has a cylindrical shape, preferably 515 mm high and 484 mm in diameter, which is preferably maintained at 120 cm from the ground by four legs (6).

### Operation Mode:

The cheesemaking apparatus is turned on and off in the control panel, wherein a number of properly labelled keys for mechanical actuation are present: centrifugal pumps, raising and lowering movements of the cover (7), and rotation direction of stirring/cutting elements (1) (for cutting or stirring besides keys that allow: setting the fluid/liquid temperature of the jacket (2), monitor the milk temperature inside the vat, and shutting down the apparatus in case of emergency.

The process starts with operation of the centrifugal pump that allows fluid/liquid to be circulated through the heating/cooling jacket (2), the temperature of which was preset in the control panel. Once the milk is introduced in the vat (5) from the refrigeration tank by means of a centrifugal pump, the stirring/cutting elements (1) start rotating in the stirring direction. At this point, the periscope (4) is withdrawn from the vat (5), so as to allow the stirring (or cutting) movement to freely occur; conversely, a proximity control device (14) will automatically interrupt the abovementioned movement of the stirring/cutting elements (1), for security reasons.

The stirring movement is also always stopped while rennet and/or starter cultures are being added, and coagulation or draining of whey is taking place. When the motion is deliberately interrupted in the control panel, the position at which the stirring/cutting elements (1) are to rest inside the vat (5) is determined by a proximity control device (not shown). Therefore, the stirring/cutting elements will not rest below the lid (8), as it would disturb rennet and/or starter culture addition. After milk coagulation, the stirring/cutting elements (1) are operated in the (reverse) cutting direction, and afterwards in the stirring direction.

At the moment when whey draining is started, the stirring movement is switched off in the control panel, and the periscope (4) is manually placed into the vat (5) to approximately coincide with the free surface of whey. Afterwards, the periscope (4) valve (15) in its lower end is manually opened to allow whey draining. If by mistake the movement of the stirring/cutting elements (1) were not stopped before placing the periscope (4) into the vat (5), the proximity control device (14) in the lower end of the vat (5) would at once, for security reasons, interrupt said movement, as soon as the periscope parts from the said device (14). The periscope (4) is then gradually lowered inside the vat (5), so that the aperture will stand at the free surface of whey at all times, until the desired amount of whey has been withdrawn. At this point, the periscope (4) valve (15) is closed and the periscope is removed form the inside of the vat (5). The stirring movement of the stirring/cutting elements is again effected, but this is mainly accomplished if the periscope is completely withdrawn from the vat (5), due to the presence of the aforementioned proximity control device (14).

Finally, with the stirring and cutting elements (1) still in motion and the cutting plates (12, 13) closed, the sealant plate (21) of the vat (5) is manually opened while stirring is still in progress, and the curd with residual whey is thus allowed to flow into the vertical perforated cylinder (11) by gravity. The mould is placed under the closed lower cutting plate (13), the upper cutting plate (12) being in place, thus allowing the space between both cutting plates (12, 13) to be filled with whey. Before filling in the mould (3), the upper cutter plate (12) is placed into the vertical cylinder (11) and the lower cutting plate (13) is withdrawn. Once filled with curd, the mould (3) is then manually removed after the cutting plate (13) has been again placed into the cylinder, and the process goes on via withdrawing the cutting plate (12) to fill the space between cutting elements (12, 13) and so successively until the vat has been completely emptied.

During automatic cleaning of the inside of the apparatus, the centrifugal pump (the same that was used to introduce milk) introduces a cleaning solution from an external washing tank (not shown), into the cheesemaking vat (5), whereas the detergent will enter via the cleaning nozzle (16) and will exit via the vertical perforated cylinder (11), eventually falling into the washing tank, so as to close the circuit.

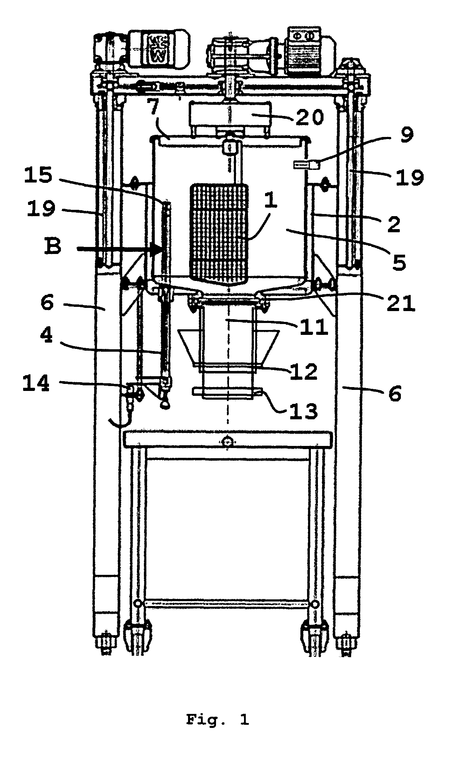

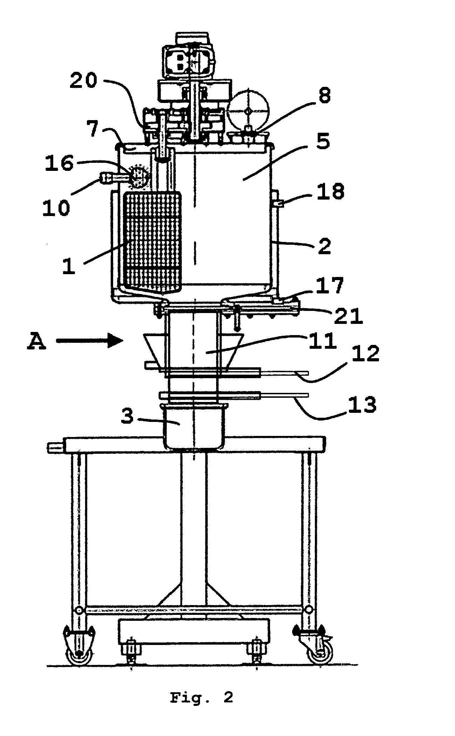

With reference to the drawings, the vat (5) for coagulation, cutting and draining, as well as the curd/whey discharge system (A) into the moulds (3), are shown schematically in Figs. 1 and 2. The vat (5) comprises a heating jacket (2), covering the sides and the bottom with a preferred thickness of 20 mm for fluid/liquid recirculation, for example water at 50-55 °C.

As shown in Fig. 2 at the lower side end of the vat (5), the heating fluid/liquid flows up to at least 10 L/min into the jacket (2) through an inlet pipe (17), and exits through an outlet pipe (18) at the upper end of the vat (5). In order to provide water recirculation to be used as heating fluid, the circuit is closed, and comprises a funnel to allow for air escape and relief of over-pressure - the stream being returned to the gas water heater by pumping, with a flow rate control valve. The jacket includes baffles for convenient water distribution and to prevent short-circuiting. The upper end of the vat (5), as shown in Fig. 1, is closed with a cover (7), which can be mechanically raised and lowered by switching on the corresponding engine in the control panel, and the movement of which occurs along four vertical shafts (19). The cover (7) movement allows access to the interior of the vat (5), not only for checking purposes but also for replacement of the stirring/cutting elements (1). In addition, the maximum and minimum opening of the cover are controlled by two sensors arranged at the opening ends of the cover (7). The cover (7) of the vat (5) comprises: a lid (8), which is mounted for check-up purposes and to add rennet and/or starter cultures, and/or adjustment purposes; and mechanical devices (20), which make the rotation movement of the cutting elements (1) possible, hence allowing the stirring or cutting operations.

With regard to Figs. 1 and 2, the cutting elements (1), made of stainless steel, comprise 11 knives preferably spaced apart at a distance of about 15 mm, and are vertically mounted inside the vat (5) - but on one side only. Such cutting elements are fixed in such a way that they are arranged in an attack angle for longitudinal cutting of the curd when in its direct rotation, and for stirring the milk or curd when in its reverse rotation; the direction reversal is mechanically controlled by the operator, the variable rotation speed being achieved by means of a frequency exchanger (not shown). The cutting elements (1) remain inside the vat (5) during the whole cheesemaking process, but they may be removed for adjustment or maintenance purposes.

The vat (5) is equipped with three proximity control devices: one controlling the maximum and minimum opening of the cover (7); an other determining the position at which the stirring/cutting elements (1) are to rest when their motion is interrupted; and a third device (14) interrupting the stirring/cutting movement. The vat (5) is also equipped with a temperature control device, which allows monitoring of the temperature of the milk and curd inside the vat (5) by the operator via a knob (not shown) in the control panel. In the body of the vat (5), a longitudinal glass window (not shown) exists, with a volumetric scale that allows observation of the milk and whey levels. The milk is supplied to the vat (5) through an inlet pipe (9), by means of a centrifugal pump.

In the lower end of the vat (5), as shown in Fig. 1, an extensible vertical pipe (4) is mounted, that can be manually moved in a telescopic fashion; such a system (B) allows whey to drain to the exterior of the vat from its upper opening (15). For security of operation, when the said periscope (4) is placed inside the vat (5), the stirring/cutting elements (1) stop automatically via the proximity control device (14).

Referring once again to Figs. 1 and 2, the bottom surface of the vat (5) has a slope of at least 10°, which allows for spontaneous curd and whey discharge. The lower opening of the vat (5) is closed by means of a sealant plate (21), which manually opens to the inside area of a cylinder with perforated walls (11); this cylinder (11) is removable, and its dimensions are set as those intended for the final cheese product. The lower opening of the aforementioned perforated cylinder (11) may be closed with two horizontal cutting plates (12, 13), separated by a preset (fixed) distance and manually controlled by the operator.

Finally, a cleaning nozzle (16) is provided inside the vat (5), as disclosed in Fig. 2, that receives the cleaning solution under pressure as supplied by the washing tank via a centrifugal pump; the said cleaning nozzle (16) permits automatic cleaning of the inside of the vat (5), as well as of the perforated cylinder (11) associated thereof.

It should be clear that the previously described embodiments of the present cheesemaking apparatus are only examples of possible implementation, and are stated mainly to illustrate the principles of the invention. Obviously, variations and modifications can be made to the preferred embodiments referred to above, without substantially deviating from the scope of the inventive idea. Hence, all such modifications and changes should be included in the scope of the present invention, and accordingly protected by the following claims.

## Claims

1. Cheesemaking apparatus, which allows sequential coagulation, cutting and draining, as well as curd/whey discharge from the vat to moulds comprising the following elements: a coagulation vat (5) provided with cutting and draining facilities; a removable upper cover (7); a heating/cooling jacket (2), that uses a temperature-controlled fluid/liquid; a centrifugal pump, to fill in the vat (5) with milk from the refrigerating tank; two side inlet ports, a first inlet (9) for the milk and a second inlet (10) for the cleaning solution; a draining system for whey (B); a curd discharge system (A) into perforated cylindrical moulds (3), with cutting plates (12, 13); milk temperature control devices, and proximity control devices at the opening ends of the cover (7) and of the whey level (4); and a control panel, to program and control all operations thereof.

2. Cheesemaking apparatus, according to claim 1, **characterized in that** the vat (5) has a maximum volume capacity of 50 L.

3. Cheesemaking apparatus, according to claim 1, **characterized in that** the vat (5) comprises: a cover (7), which opens automatically, provided with a lid (8) to add rennet and/or starter cultures; mechanical devices (20), that allow rotational movements of the cutting elements (1); and mechanical rising and lowering means, to slide the cover (7) supported by four combined vertical shafts (19).

4. Cheesemaking apparatus, according to claim 1, **characterized in that** the vat (5) comprises a side longitudinal glass window, with a volumetric scale, and a slope in the bottom area for curd and whey discharge when the blocking plate (21) is opened.

5. Cheesemaking apparatus, according to claim 1, **characterized in that** the vat (5) is provided with a vertically movable periscope (8), such that, when placed into the vat (5) up to the upper level of whey, allows its drainage when the upper aperture of the periscope (8) is open.

6. Cheesemaking apparatus, according to claim 1, **characterized in that** the curd discharge system (A) comprises a movable circular column with perforated walls (11), connected to two manually removable horizontal cutting plates (12, 13), which define the space that eventually determines the height of the cheese and where pre-moulding of curd takes place, so as to allow manufacture of uniformly sized cheese.

7. Cheesemaking apparatus, according to claim 1, **characterized in that** the vat (5) comprises a removable system of cutting elements (1) vertically positioned, extending from the axis of the vat (5) outwardly and in a single direction, and which undertakes the task of both homogenising the milk and cutting the curd, as it is stirred under variable controlled speed, in one or the other direction.

8. Cheesemaking apparatus, according to claim 1, comprising a temperature control device or physico-chemical control devices, in particular a softness sensor device based on an ultra sound probe or an acid detector based on a combined pH electrode.

9. Cheesemaking apparatus, according to claim 1, **characterized in that** the control panel continuously monitors, and automatically or semi-automatically controls all operations involved in cheesemaking.

10. Cheesemaking apparatus, according to claim 6, comprising an integrated cleaning system that comprises a cleaning nozzle (16), arranged inside the vat (5), which receives the cleaning solution under pressure from the washing tank via a centrifugal pump; and wherein the cleaning nozzle (16) performs automatic cleaning of the vat (5), as well as of the perforated cylinder (11) connected thereto.

11. Cheesemaking apparatus, according to claim 1, comprising proximity control devices: for the maximum and minimum opening of the cover (7); to determine the position in which the cutting elements (1) should rest when motion is stopped; and to interrupt the stirring/cutting movements, whenever necessary.

12. Cheesemaking apparatus according to claim 1, **characterized in that** the vat is made of stainless steel.

13. Cheesemaking apparatus, according to claim 1, **characterized in that** the heating/cooling jacket (2) is fed from an external gas-operated heater by an inlet pipe (17) connected to the bottom end of the vat (5), whereas the exit is carried out through an outlet pipe (18) at the upper end of the vat (5).

14. Use of the cheesemaking apparatus, according to claim 1, **characterized in that** its functionality comprises the following steps:
- actuating the centrifugal pump, that promotes water circulation/ liquid through the heating/cooling jacket (2);
- actuating the stirring/cutting elements (1), once the vat (5) is filled with milk from an external refrigeration tank by a centrifugal pump;
- turning off the stirring movement while adding rennet and/or starter cultures during coagulation, and while whey discharging during curd draining;
- manually introducing the periscope (4) into the vat (5), up to the approximate whey level;
- manually opening the periscope (4) valve (15), located in its lower end, for whey draining;
- manually lowering the periscope (4), inside the vat (5), until the desired amount of whey has been withdrawn;
- closing the periscope (4) valve (15), and removing it from the vat (5) back to its initial rest position;
- actuating the stirring/cutting elements (1), when the periscope (4) is totally withdrawn from the vat (5);
- after the stirring/cutting elements (1) have been connected and the cutting plates (21) have been closed, manually opening the sealant plate (21) of the vat (5), to allow curd/whey to fall into the perforated cylinder (11) wherein it is moulded, the waste whey being forced to drain by gravity;
- placing the mould (3) under the lower cutting plate (13), and opening the upper cutting plate (12) while the other plate is closed, and filling in the space limited by the two blocking plates (12, 13) with curd;
- placing the upper cutting plate (12) into the vertical cylinder (11), thus removing the lower cutting plate (13) before filling the mould (3);
- manually removing the mould (3) filled with curd, after the cutting plate (13) has been again placed in the cylinder;
- repeating the above procedure, withdrawing again the cutting plate (12) for successive filling the space between the cutting plates (12, 13), until all curd has been delivered out of the vat (5); and
- actuating the said centrifugal pump in order to drive the cleaning solution from the washing tank, wherein the detergent is diluted, towards the vat (5), wherein it enters through a cleaning nozzle (16), and exits through the lower end of the vat (5) via the vertical perforated cylinder (11), again falling into the washing tank.
